# EUROPÄISCHE PATENTSCHRIFT

(11) **EP 0 798 164 B1**
(45) Veröffentlichungstag und Bekanntmachung des Hinweises auf die Patenterteilung: **11.07.2001**
(21) Anmeldenummer: 97104565.3
(22) Anmeldetag: 18.03.1997
(51) Int. Cl.: B60R 11/02

(54) **Lautsprecher**
Speaker
Haut-parleur

(30) Priorität: 27.03.1996 DE 19612080
(43) Veröffentlichungstag der Anmeldung: 01.10.1997
(73) Patentinhaber: Harman Audio Electronic Systems GmbH, 94315 Straubing (DE)
(72) Erfinder: Etzel, Hubert, 94405 Landau a.d. Isar (DE)
(74) Vertreter: Patentanwälte Westphal, Mussgnug & Partner

(56) Entgegenhaltungen:
- EP-A- 0 523 410
- DE-A- 3 634 269
- DE-A- 3 706 918
- US-A- 4 919 369
- US-A- 5 416 283

## Beschreibung

### Technisches Gebiet

Die Erfindung befaßt sich mit der Unterbringung von Lautsprechern in Kraftfahrzeugen.

### Stand der Technik

Gemäß dem Stand der Technik wie z.B. der gattungs bildenden US 5 416 283 A, ist es bekannt, Lautsprecher in Gehäuse einzusetzen, um durch die Wirkung des Gehäuses als Schallwand akustische Kurzschlüsse zwischen den von der Vorder- und Rückseite der Lautsprechermembran abgestrahlten Schallwellen auszuschließen. Allgemein ist dies so realisiert, daß das Chassis eines Lautsprechers, welches je nach Ausbildung entweder vom Lautsprecherkorb selbst oder von dem Lautsprecherkorb und einem mit diesem verbundenen Einbaurahmen gebildet sein kann, in einer Einbauöffnung des Gehäuses angeordnet und in dieser Endlage durch die Wirkung von Befestigungsmitteln mit dem Gehäuse verbunden wird. Da Lautsprecher mitunter ein erhebliches Eigengewicht haben können und der in ein Gehäuse eingesetzte Lautsprecher die Einbauöffnung möglichst über seine gesamte Lebensdauer luftdicht verschließen soll, werden bei hochwertigen Anordnungen die Chassis nicht mit dem Gehäuse verklebt, sondern mittels von Schrauben- oder Schnappverbindungen mit dem Gehäuse verbunden. Wie leicht einzusehen ist, können derartige Lautsprecher nur durch den Einsatz von entsprechenden Werkzeugen aus dem Gehäuse gelöst werden.

Hierneben besteht das permanente Problem, Lautsprecher in Kraftfahrzeugen zu integrieren. Dieses Problem, welches insbesondere bei Baßlautsprechern bzw. bei Baßboxkonzepten auftritt, rührt daher, daß derartige Anordnungen zu einer akzeptablen Baßwiedergabe große Volumina des Fahrzeuginnenraums beanspruchen und daß diese Volumina von der Kraftfahrzeugindustrie nicht zur Verfügung gestellt werden. Dieses Problem entschärft sich aber in soweit, daß Schallwellen vom menschlichen Gehör nicht lokalisiert werden können, wenn sie sich auf die Wiedergabe von niederfrequenten Signalen beschränken. Dies bedeutet, daß Baßlautsprecher nicht notwendig auf eine Abhörperson ausgerichtet werden müssen. Die Ausnutzung dieser Erkenntnis hat dazu geführt, daß die tiefe Frequenzen abgebenden Lautsprecher bzw. Lautsprecheranordnungen etwa unter den Vordersitzen des Kraftfahrzeuges (so WO 91/01544) bzw. in der hinteren Mittelarmlehne (so EP 0523410) des Fahrzeugs angeordnet werden.

Da aber oft auch der Platz unter den Sitzen bzw. in der Mittelarmlehne nicht zur Verfügung steht, ist es Aufgabe der Erfindung, die Einsatzmöglichkeiten von großdimensionierten Lautsprechern zur Baßwiedergabe in Kraftfahrzeugen zu steigern, ohne dabei an die für diese Zwecke von der Kraftfahrzeugindustrie gemachten Platz- bzw. Volumenangaben gebunden zu sein.

### Darstellung der Erfindung

Diese Aufgabe wird mit den in Anspruch 1 angegebenen Mitteln gelöst. Vorteilhafte Aus - und Weiterbildungen der Erfindung sind in den Ansprüchen 2 - 9 entnehmbar.

Wesentliche Erkenntnis der Erfindung ist es, eine Anzahl aller vorhandener Befestigungsmittel mit zumindest einem Handgriff zu verbinden, so daß durch Betätigung des oder der Handgriffe die Endlage des Chassis im Gehäuse aufgehoben werden kann.

Durch diese Maßnahme ist es möglich, das in einem Kraftfahrzeug vorhandene Platzangebot besser zu nutzen, denn durch die Entfernbarkeit des Lautsprechers ist es möglich, ein ohnehin vorhandenes Platzangebot im Fahrzeug zu nutzen, welches allerdings nach den Vorgaben der Kraftfahrzeugindustrie für Zubehörteile verwendet wird, die vom späteren Eigentümer des Fahrzeugs nur an wenigen Tagen im Jahr nutzbar sind. So ist z.B. die in Anspruch 7 angegebene Skisacköffnung ein solches Zubehörteil, welches für die Kraftfahrzeugindustrie eine wesentliche Ausstattungsvariante ist, jedoch vom späteren Eigentümer des Fahrzeugs nur selten genutzt wird. Wird dieser Durchschiebetunnel, in dem sich der Skisack des Kraftfahrzeuges befindet, als Einbauort für einen zusätzlichen Lautsprecher genutzt, so trägt dieser während der überwiegenden Verwendung des Fahrzeuges zur Klangverbesserung bei. Hierbei ist die Nutzung des Durchschiebetunnels in der hinteren Sitzlehne als Montageort für den entfernbaren Lautsprecher von besonderer Bedeutung, weil durch diese Anordnung des Lautsprechers im Tunnel und der damit gegebenen Verbindung zwischen dem Innenraum und dem Kofferraum das Volumen des Kofferraumes, welches ebenfalls bei der Mehrzahl der Fahrten nicht benutzt wird, zur Tonwiedergabe, insbesondere Baßwiedergabe mitbenutzt werden kann. Dies heißt aber nicht, daß der in einem solchen Durchschiebetunnel angeordnete Lautsprecher nur bei leerem Kofferraum nutzbar ist. Vielmehr kann ein im Durchschiebetunnel angeordneter Lautsprecher auch bei gefülltem Kofferraum genutzt werden. Die Qualitätseinbußen, welche durch einen gefüllten Kofferraum auftreten, sind gering und führen im Vergleich zu einer Anordnung, welche keinen Lautsprecher in der Durchschiebeöffnung aufweist, zu einer wesentlich besseren Baßwiedergabe.

Ist der Lautsprecher gemäß Anspruch 3 mittels einer Scharnieranordnung im Gehäuse schwenkbar angeordnet, entstehen keine Aufbewahrungsprobleme, wenn der Anordnungsort für den Lautsprecher entsprechend der Funktion genutzt wird, die der Fahrzeughersteller ursprünglich vorgesehen hatte.

Besonders vorteilhaft ist es, wenn am Chassis und am Gehäuse zueinander komplementäre Kontaktmittel vorhanden sind, die in der Endlage des Chassis im Gehäuse ineinandergreifen, da dadurch besondere Maßnahmen zur Kontaktierung des Lautsprechers entfallen.

Besonders einfach ist die Handhabung und die Herstellung von eben benannten Lautsprechern dann , wenn zumindest ein aus zwei Teilen gebildetes Befestigungsmittel gleichzeitig das erste und zweite Kontaktmittel bildet, da sofort bei Herstellung der Endlage die Stromzufuhr zwischen einer Stromquelle und dem Lautsprecher hergestellt wird.

Ist gemäß Anspruch 9 ein Sensor vorhanden, welcher bei Aufhebung der Endlage die am Gehäuse angeordneten zweiten Kontaktmittel stromlos schaltet, werden Kurzschlüsse, welche beispielsweise durch die Nutzung des jeweiligen Einbauorts entsprechend der Vorgaben der Kraftfahrzeugindustrie entstehen können, ausgeschlossen. Letzteres ist insbesondere dann wesentlich, wenn der Lautsprecher als sogenannter Aktivlautsprecher betrieben wird, da in diesem Fall der Lautsprecher nicht nur mit den Tonsignalen, sondern zum Betrieb des Verstärkers mit einer eigenständigen Stromzuführung versehen sein muß.

### Kurze Darstellung der Figuren

Es zeigen:
- Fig. 1: einen (Einbau-) Lautsprecher in perspektivischer Darstellung;
- Fig. 2: einen Lautsprecher gemäß Fig. 1 in Seitenansicht;
- Fig. 3: eine Einbausituation eines Lautsprechers gemäß Fig. 1;
- Fig. 4: eine weitere Darstellung gemäß Fig. 3; und
- Fig. 5: eine weitere Darstellung gemäß Fig. 4.

### Wege zum Ausführen der Erfindung

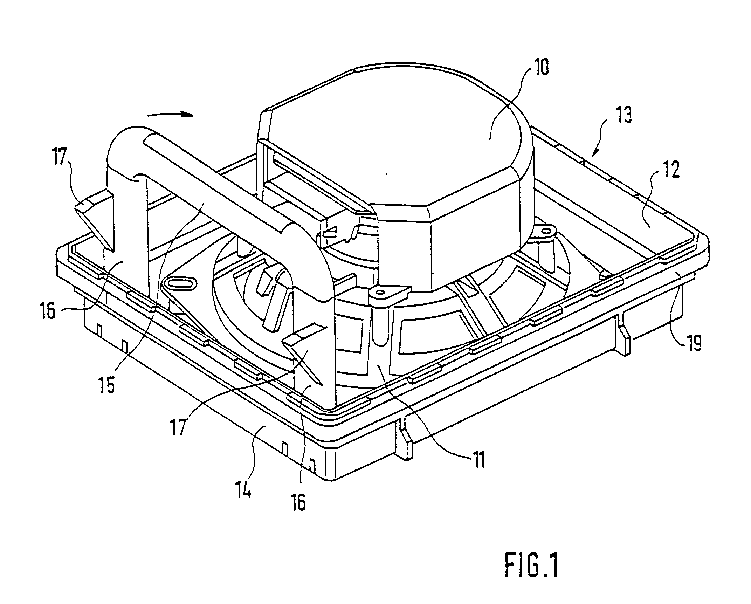

Fig. 1 zeigt einen Baßlautsprecher (10). Dieser Baßlautsprecher (10) ist mit dem Lautsprecherkorb (11) mit einem Einbaurahmen (12) verbunden. Diese Kombination aus Lautsprecherkorb (11) und Einbaurahmen (12) wird im Zusammenhang mit dieser Anmeldung als Chassis (13) bezeichnet.

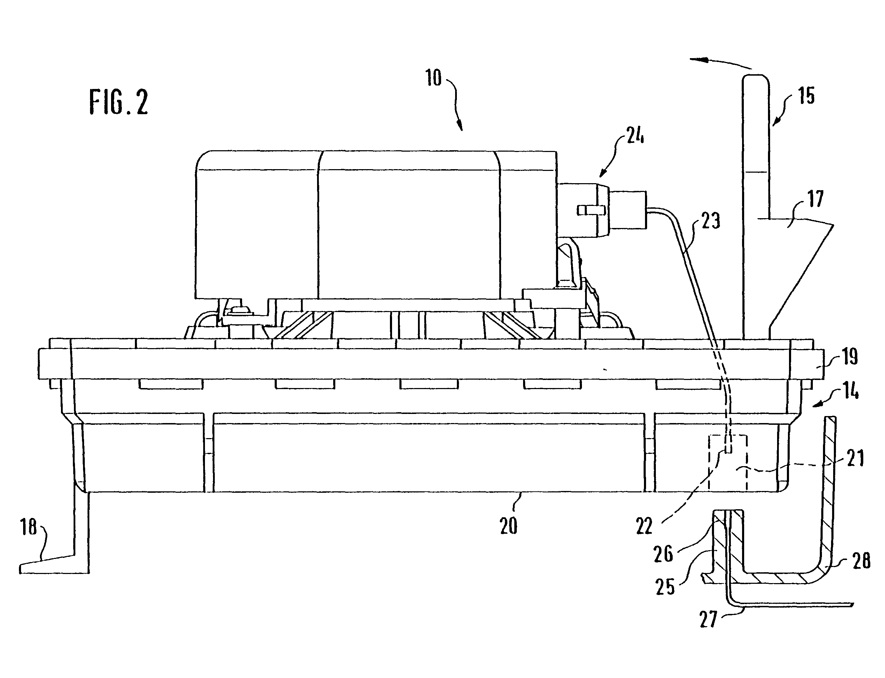

Die eine Seitenwand (14) des Einbaurahmens (12) ist mit einem u-förmig ausgebildeten Handgriff (15) versehen, welcher durch die Elastizität des Materials in Pfeilrichtung beweglich ist. Ferner ist jeder Schenkel (16) des Handgriffes (15) mit jeweils einem Befestigungsmittel in der Form einer Nase (17) versehen. Außerdem sind an der der Seite (14) des Einbaurahmens (12) gegenüberliegenden Seite ebenfalls Befestigungsmittel in der Form von Nasen (18) (in Fig. 1 nicht sichtbar) vorgesehen. Des weiteren ist der Umfang des Einbaurahmens (12) mit einer umlaufenden Dichtung (19) versehen. Die Kontaktierung des Baßlautsprechers (10), welche in Fig. 1 nicht näher dargestellt ist, wird in Zusammenhang mit Fig. 2 näher erläutert.

Die Darstellung gemäß Fig. 2 ist eine Seitenansicht einer Anordnung gemäß Fig. 1. Dieser Darstellung sind auch die Nasen (18) entnehmbar, welche an der der Seite (14) des Einbaurahmens (12) gegenüberliegenden Seite angeordnet sind. Ferner ist an der Unterseite (20) des Einbaurahmens (12) eine Buchse (21) ausgebildet, in welcher eine Mehrzahl von ersten Kontaktmitteln (22) angeordnet sind. Diese Kontaktmittel (22), von denen in Fig. 2 nur eins sichtbar ist, sind jeweils über entsprechende Leitungen (23) mit entsprechenden Anschlüssen der Anschlußleiste (24) des Lautsprechers (10) leitend verbunden.

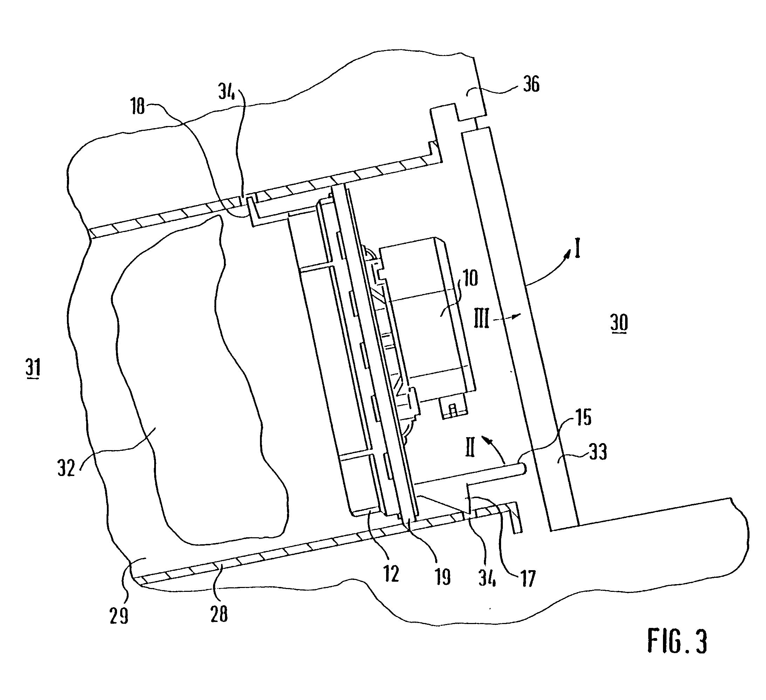

Gegenüber der Buchse (21) ist ein zu dieser komplementärer Stecker (25) gezeigt, der zweite und zu den ersten Kontaktmitteln (22) komplementäre Kontaktmittel (26) beinhaltet. Diese Kontaktmittel (26) sind jeweils über Leitungen (27) mit einer Strom-/Spannungs-Quelle (nicht gezeigt) leitend verbunden. Nur der Vollständigkeit halber sei darauf hingewiesen, daß der Stecker (25) und seine gezeigte Halterung schon Teil eines Gehäuses (28) sind, welches in Fig. 3 - 5 näher erörtert wird.

Wird nun die in Fig. 2 gezeigte Einheit im wesentlichen längs zur Lautsprechermittelachse auf den Stecker (26) zu bewegt, kontaktieren die zweiten Kontaktmittel (26) die entsprechenden ersten Kontaktmittel (22) in der Buchse (21). Damit im umgekehrten Fall, also dann, wenn die gegenseitige Kontaktierung von Stecker (25) und Buchse (21) aufgehoben werden soll, Kurzschlüsse an den unter Spannung stehenden zweiten Kontaktmitteln (26) ausgeschlossen werden, können beispielsweise am Stecker (25) in fachmännisch bekannter Weise Sensoren ausgebildet sein, die zusammen mit einer ebenfalls bekannten Unterbrecherschaltung die zweiten Kontaktmittel (26) stromlos schalten, wenn der Stecker (25) - so wie in Fig. 2 gezeigt - nicht in die Buchse (21) eingeführt ist. Im einfachsten Fall kann ein solcher Sensor ein in die Buchse (21) eingesetztes Metallschwert sein, welches im verbundenen Zustand von Buchse (21) und Stecker (25) einen Stromkreis im Stecker (25) schließt und dadurch der Unterbrecherschaltung anzeigt, daß die Verbindung zwischen den beiden Kontakmitteln (22, 26) hergestellt ist, worauf die Leitungen (27) bestromt werden.

Nur der Vollständigkeit halber sei darauf hingewiesen, daß in einem anderen - nicht dargestellten - Ausführungsbeispiel die ersten Kontaktmittel (22) auch von den Nasen (17) und/oder (18) gebildet sein können. In diesem Fall sind in dem Gehäuse (28) (in Fig. 2 nicht gezeigt) entsprechende Öffnungen (34) vorgesehen, welche dann die zweiten Kontaktmittel (26) bilden.

Fig. 3 zeigt eine gemäß Fig. 1 beschriebene Einheit, welche in ein Gehäuse (28) eingesetzt ist. Dieses Gehäuse (28) ist vorliegend ein in der Rücklehne (36) eines Kraftfahrzeuges angeordneter Durchschiebetunnel (29), welcher den Innenraum (30) des Kraftfahrzeuges mit dem Kofferraum (31) verbindet. Dieser Durchschiebetunnel ist gemäß den Vorgaben der Kraftfahrzeugindustrie als Skisacköffnung nutzbar. Der Skisack (32) ist im in Fig. 3 gezeigten Ausführungsbeispiel zusammengerollt im Tunnel (29) angeordnet. Soll nun die in Fig. 3 gezeigte Anordnung entsprechend ihrer Zweckbestimmung als Skisacköffnung genutzt werden, muß zunächst die Abdeckung (33) entsprechend dem Pfeil I entfernt oder bewegt werden. Dadurch wird der Lautsprecher (10) sichtbar.

Durch bloßes Anheben des Handgriffes (15) entsprechend dem Pfeil II werden dann die Nasen (17) aus ihren komplementären Öffnungen (34) des Gehäuses (28) bewegt und der Lautsprecher (10) läßt sich durch eine mittels des Pfeiles III angedeuteten Schwenkbewegung, welche zum Ausfädeln der oberen Nasen (18) notwendig ist, dem Tunnel (29) entnehmen. Soll der Lautsprecher wieder in den Tunnel (29) eingesetzt werden, so müssen die eben genannten Bewegungsabläufe in umgekehrter Reihenfolge ausgeführt werden. Hierbei ist offensichtlich, daß beim Einsetzen des Lautsprechers (10) die Nasen (17) an der Wandung des Gehäuses (28) entlanggleiten und dann in ihrer Endlage durch die Rückstellbewegung des Handgriffes (25) in die Öffnungen (34) einrasten.

Auch ist der Fig. 3 entnehmbar, daß die in Fig. 1 und 2 gezeigte Dichtung (19) das Chassis (13) gegenüber dem Gehäuse abdichtet, wenn das Chassis (13) seine Endlage im Gehäuse (28) eingenommen hat.

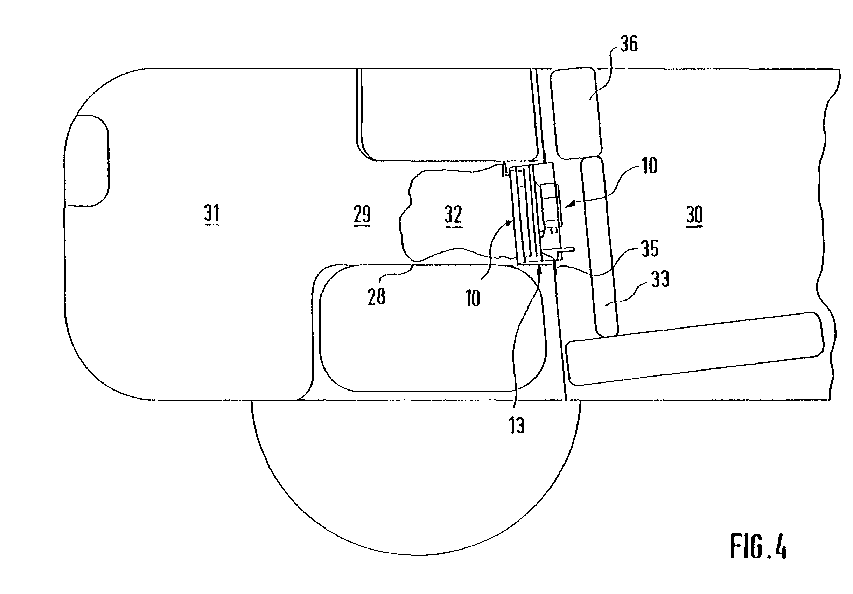

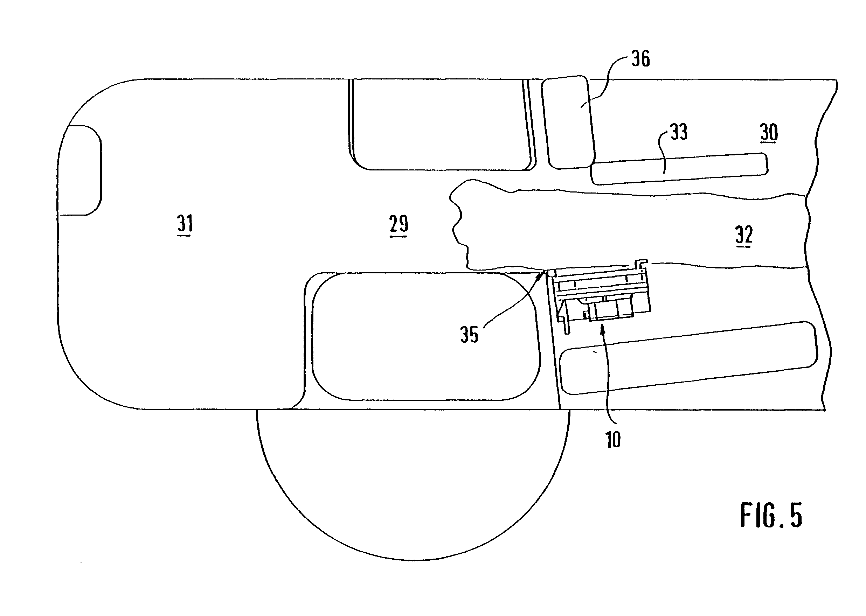

Aus Gründen der Übersichtlichkeit wurde in Fig. 3 auf die Darstellung der Kontaktierung des Lautsprechers (10) verzichtet. Die in Fig. 3 gezeigten Verhältnisse sind auch in Figur 4 gezeigt. Im Unterschied zur Darstellung gemäß Fig. 3 ist das Chassis (13) des Lautsprechers (10) mit dem Gehäuse (28) mittels einer Scharnieranordnung (35) dauerhaft verbunden. Soll nun der Tunnel (29) entsprechend der Zweckbestimmung als Skisack (32) genutzt werden, läßt sich der Lautsprecher (10) umklappen. Letztere Verhätnisse sind in Fig. 5 näher gezeigt. Auch ist der Fig. 5 entnehmbar, daß bei Nutzung des Tunnels (29) zum Durchschieben von entsprechenden Gegenständen der Skisack (32) in Richtung des Innenraumes (30) des Fahrzeuges ausgerollt ist.

## Patentansprüche

1. Lautsprecher
mit einem Chassis (13) und einem Gehäuse (28), wobei das Chassis (13) in das Gehäuse (28) eingesetzt ist und die sich durch das Einsetzen ergebende Endlage des Chassis (13) im Gehäuse (28) mittels zumindest eines Befestigungsmittels (17/34, 18/34), welches jeweils aus zwei zueinander komplementären Teilen (17/34; 18/34) gebildet ist, lagefixiert ist,
**dadurch gekennzeichnet,**
daß zumindest eine Anzahl aller vorhandenen Befestigungsmittel (17) mit nur einem oder einer Mehrzahl von Handgriffen (15) verbunden ist, indem die jeweils gleichgeformten bzw. gleichwirkenden Teile (17) dieser Anzahl von Befestigungsmitteln mit dem oder den Handgriffen (15) in körperlicher Verbindung stehen und durch Betätigung des oder der Handgriffe (15) beweglich sind, und
daß durch Betätigung des oder der Handgriffe (15) zumindest die Endlage des Chassis (13) im Gehäuse (28), aufhebbar ist.

2. Lautsprecher nach Anspruch 1,
**dadurch gekennzeichnet,**
daß bei Vorhandensein auch von Befestigungsmitteln (18/34), deren jeweilige Teile (18) nicht mittels des oder der Handgriffe (15) versehen sind, diese Befestigungsmittel jeweils von einer Nase (18) und einer die Nase (18) in der Endlage des Chassis (13) im Gehäuse (28) arretierenden Öffnung (34) gebildet werden.

3. Lautsprecher nach Anspruch 1,
**dadurch gekennzeichnet,**
daß bei Vorhandensein auch von Befestigungsmitteln (18/34), deren jeweilige Teile (18) nicht mittels des oder der Handgriffe (15) bewegbar sind, diese Befestigungsmittel (18) als Scharnieranordnung (35) ausgebildet sind, so daß das Chassis (13) im Gehäuse (28) zur Aufhebung der Endlage um die Scharnieranordnung (35) schwenkbar angeordnet ist,

4. Lautsprecher nach einem der Ansprüche 1 - 3,
**dadurch gekennzeichnet,**
daß am Chassis (13) erste elektrische Kontaktmittel (22) und am Gehäuse (28) zweite elektrische und zu den ersten Kontaktmitteln (22) komplementäre Kontaktmittel (26) vorgesehen sind, wobei zumindest eine leitfähige Verbindung zwischen den beiden Kontaktmitteln (22, 26) gleichzeitig mit dem Überführen des Chassis (13) in seine Endlage im Gehäuse (28), herstellbar ist.

5. Lautsprecher nach Anspruch 4,
**dadurch gekennzeichnet,**
daß zumindest ein aus den beiden zueinander komplementären Teilen gebildetes Befestigungselement vorhanden ist, dessen eines Teil (17, 18) gleichzeitig als erstes Kontaktmittel (22) und dessen anderes Teil (34) gleichzeitig als zweites Kontaktmittel (26) ausgebildet ist.

6. Lautsprecher nach einem der Ansprüche 1 - 5,
**dadurch gekennzeichnet**
daß das Gehäuse (28) von einem Durchschiebetunnel (29) gebildet wird, welcher den Kofferraum (31) eines Kraftfahrzeuges mit dessen Innenraum (30) verbindet.

7. Lautsprecher nach einem der Ansprüche 1 - 6,
**dadurch gekennzeichnet,**
daß der Durchschiebetunnel (29) eine Skisacköffnung ist.

8. Lautsprecher nach einem der Ansprüche 1 - 7,
**dadurch gekennzeichnet,**
daß das Chassis (13) mit einer Dichtung (19) versehen ist, welche in der Endlage des Chassis (13) im Gehäuse (28) einen Gasdurchtritt zwischen den Wandungen vom Gehäuse (28) und Chassis (13) ausschließt.

9. Lautsprecher nach einem der Ansprüche 1 - 8,
**dadurch gekennzeichnet,**
daß ein Sensor vorhanden ist, der mit einer auf die zweiten elektrischen Kontaktmittel (26) wirkenden Unterbrecherschaltung verbunden ist, wobei der Sensor zusammen mit der Unterbrecherschaltung die zweiten Kontaktmittel (26) stromlos schaltet, sobald die Endlage des Chassis (13) im Gehäuse (28) aufgehoben wird.

## Claims

1. A speaker
having a cabinet (13) and a housing (28), the cabinet (13) being inserted into the housing (28) and the final position of the cabinet (13) in the housing (28), produced by the insertion, being positionally fixed by means of at least one fastening means (17/34, 18/34), which is each formed from two complementary parts (17/34; 18/34),
**characterised in that** at least a number of all provided fastening means (17) is connected to only one handle or a plurality of handles (15), by the identically shaped and identically acting parts (17) of this number of fastening means being in physical communication with the handle or handles (15) and being movable by actuating the handle or handles (15),
**and in that** by actuating the handle or handles (15) at least the final position of the cabinet (13) in the housing (28) can be removed.

2. A speaker according to Claim 1,
**characterised in that** also with the provision of fastening means (18/34), the respective parts (18) of which are not provided by means of the handle or handles (15), these fastening means are each formed by a projection (18) and an opening (34) arresting the projection (18) in the final position of the cabinet (13) in the housing (28).

3. A speaker according to Claim 1,
**characterised in that** also with the provision of fastening means (18/34), the respective parts (18) of which are not movable by means of the handle or handles (15), these fastening means (18) are constructed as a hinge arrangement (35), so that the cabinet (13) is pivoted around the hinge arrangement (35) in the housing (28) for the removal of the final position.

4. A speaker according to one of Claims 1 - 3,
**characterised in that** first electrical contact means (22) are provided on the cabinet (13) and second electrical contact means (26), complementary to the first contact means (22), are provided on the housing (28), it being possible to produce at least one conductive connection between the two contact means (22, 26) simultaneously with the transfer of the cabinet (13) into its final position in the housing (28).

5. A speaker according to Claim 4,
**characterised in that** at least one fastening element formed from the two complementary parts is provided, the one part (17, 18) of which is at the same time constructed as first contact means (22) and the other part (34) of which is at the same time constructed as second contact means (26).

6. A speaker according to one of Claims 1 - 5,
**characterised in that** the housing (28) is formed by a slide-through tunnel (29), which connects the boot (31) of a motor vehicle with its interior (30).

7. A speaker according to one of Claims 1 - 6,
**characterised in that** the slide-through tunnel (29) is a ski bag opening.

8. A speaker according to one of Claims 1 - 7,
**characterised in that** the cabinet (13) is provided with a seal (19), which in the final position of the cabinet (13) in the housing (28) prevents gas passing between the walls of the housing (28) and chassis (13).

9. A speaker according to one of Claims 1 - 8,
**characterised in that** a sensor is provided, which is connected to a break circuit acting on the second electrical contact means (26), the sensor together with the break circuit switching off the second contact means (26) as soon as the final position of the cabinet (13) in the housing (28) is removed.

## Revendications

1. Haut-parleur comprenant un châssis (13) et un boîtier (28) dans lequel est emmanché le châssis (13), ce châssis (13) occupant une position finale où il est fixé dans le boîtier (28) par au moins un moyen de fixation (17/34, 18/34) composé chaque fois de deux parties complémentaires (17/34, 18/34),
caractérisé en ce qu'
au moins un certain nombre de tous les moyens de fixation (17) présents sont reliés par une ou plusieurs poignées (15), les parties (17), de même forme ou de même fonction, de ces moyens de fixation étant reliées matériellement à la ou aux poignées (15) et pouvant, quand on manoeuvre la ou les poignées (15), se déplacer de sorte que par cette manoeuvre, le châssis (13) peut quitter au moins sa position finale dans le boîtier (28).

2. Haut-parleur selon la revendication 1,
caractérisé en ce qu'
il comporte également des moyens de fixation (18/34) dont les parties (18) ne sont pas munies de la ou des poignées (15), ces moyens étant constitués chacun par un ergot (18) et une ouverture (34) qui bloque l'ergot (18) en position finale du châssis (13) dans le boîtier (28).

3. Haut-parleur selon la revendication 1,
caractérisé en ce qu'
il comporte également des moyens de fixation (18/34) dont les parties (18) ne peuvent être déplacées par l'action de la ou des poignées (15), ces moyens (18) ayant la forme d'un dispositif à charnière (35) autour duquel le châssis (13) peut basculer pour quitter sa position finale dans le boîtier (28).

4. Haut-parleur selon l'une quelconque des revendications 1 à 3,
caractérisé en ce qu'
il est prévu sur le châssis (13) des premiers moyens électriques de contact (22) et sur le boîtier (28) des seconds moyens électriques de contact (26) complémentaires des premiers contacts (22), et au moins une liaison conductrice peut être établie entre les deux moyens de contact (22, 26) au moment où le châssis (13) passe à sa position finale dans le boîtier (28) .

5. Haut-parleur selon la revendication 4,
caractérisé en ce qu'
il existe au moins un élément de fixation composé de deux parties complémentaires dont l'une (17, 18) constitue également un premier moyen de contact (22), tandis que l'autre (34) constitue également le second moyen de contact (26).

6. Haut-parleur selon l'une quelconque des revendications 1 à 5,
caractérisé en ce que
le boîtier (28) est constitué par un tunnel de coulissement (29) reliant le coffre (31) d'un véhicule à son habitacle (30).

7. Haut-parleur selon la revendication 6,
caractérisé en ce que
le tunnel de coulissement (29) est une ouverture de sac à skis.

8. Haut-parleur selon l'une quelconque des revendications 1 à 7,
caractérisé en ce que
le châssis (13) est équipé d'un joint d'étanchéité (19) qui, quand le châssis (13) occupe sa position finale dans le boîtier (28), empêche les gaz de passer entre les parois du boîtier (28) et le châssis (13).

9. Haut-parleur selon l'une quelconque des revendications 1 à 8,
caractérisé en ce qu'
il est prévu un détecteur relié à un circuit d'interruption agissant sur les seconds moyens électriques de contact (26), ce détecteur et le circuit d'interruption coupant l'alimentation des seconds moyens de contact (26) dès que le châssis (13) quitte sa position finale dans le boîtier (28).
